# EUROPÄISCHE PATENTSCHRIFT

(11) **EP 3 199 260 B1**
(45) Veröffentlichungstag und Bekanntmachung des Hinweises auf die Patenterteilung: **18.08.2021**
(21) Anmeldenummer: 17400004.2
(22) Anmeldetag: 23.01.2017
(51) Int. Cl.: B21F 27/10, B23K 11/00, B23K 101/22, B23K 26/21, B23K 37/04, B23Q 3/154, F04D 29/00, F04D 29/70

(54) **VORRICHTUNG ZUR ÜBERGABE MINDESTENS EINES RINGES IN EINE HALTEVORRICHTUNG; HALTEVORRICHTUNG FÜR MINDESTENS EINEN AN MINDESTENS EINER STREBE ZU FIXIERENDEN RING; VERFAHREN ZUM POSITIONIEREN MINDESTENS EINES RINGES AN MINDESTENS EINER STREBE**
DEVICE FOR TRANSFERRING AT LEAST ONE RING INTO A HOLDING DEVICE; HOLDING DEVICE FOR AT LEAST ONE RING TO BE CONNECTED TO AT LEAST ONE STRUT; METHOD FOR POSITIONING AT LEAST ONE RING ON AT LEAST ONE STRUT
DISPOSITIF DE TRANSFERT D'AU MOINS UNE BAGUE DANS UN DISPOSITIF DE MAINTIEN, DISPOSITIF DE MAINTIEN POUR AU MOINS UNE BAGUE À FIXER À AU MOINS UN RENFORT, PROCÉDÉ DE POSITIONNEMENT D'UNE BAGUE SUR AU MOINS UN RENFORT

(30) Priorität: 27.01.2016 DE 102016001043
(43) Veröffentlichungstag der Anmeldung: 02.08.2017
(73) Patentinhaber: Stadtmüller, Uwe, 74653 Künzelsau (DE)
(72) Erfinder: Stadtmüller, Uwe, 74653 Künzelsau (DE)
(74) Vertreter: Patentanwälte Schuster, Müller & Partner mbB

(56) Entgegenhaltungen:
- DE-A1-102009 040 083
- GB-A- 904 055
- JP-A- H06 126 678
- US-A- 1 528 796

## Beschreibung

### Stand der Technik

Die Erfindung geht aus von einer Vorrichtung zur Übergabe mindestens eines Ringes in eine Haltevorrichtung, nach der Gattung des Anspruchs 1, einer Haltevorrichtung für mindestens einen an mindestens einer Strebe (z.B. Ringstrebe, Tragstrebe) zu fixierenden Ring, nach der Gattung des Anspruchs 8, und einem Verfahren zum Positionieren mindestens eines Ringes an mindestens einer Strebe (z.B. Ringstrebe, Tragstrebe), nach der Gattung des Anspruchs 10, wobei durch den bzw. die Ringe und der bzw. den Streben, die im Fügebereich eine Punkt- oder kurze Linienberührung aufweisen, beispielsweise eine Drahtgitterstruktur für Produkte, wie Drahtkörbe, Zaunfelder, Moniergitter, Schutzgitter für Lüfter odgl. entstehen.

Gitterförmige Strukturen, bei denen im Berührungs- bzw. Kreuzungspunkt der das Gitter bildenden drahtförmigen Teile in der Regel lediglich eine Punkt- allenfalls eine kurze Linienberührung vorliegt, werden überwiegend durch Widerstands- bzw. Kondensatorentladungsschweißen hergestellt. Bekannt ist ein Verfahren zum Verschweißen von sich kreuzenden Drähten in deren Kreuzungspunkt, bei dem die vorgeformten Drähte aufeinander gelegt und im Kreuzungspunkt gezielt zusammengepresst werden. Dem jeweiligen Kreuzungspunkt wird über an diesem anliegende Elektroden eine hohe Stoßstromenergie durch Entladung eines Kondensators über einen Impulstransformator zugeführt (Kondensatorentladungsschweißen). Infolge des Anpressdrucks verringert sich die Dicke der übereinander liegenden Drähte beim Aufschmelzen des Materials, so dass eine innige flächige Verbindung zwischen den Drähten entsteht. Die Vorrichtung zur Durchführung des Kondensatorentladungsschweißverfahrens besteht aus einer unteren Elektrode, auf der der Schweißling aufliegt, einer dieser gegenüberliegenden oberen Elektrode und einer Hubeinrichtung zum Gegeneinanderverfahren der beiden Elektroden (DE 100 03 428 A1).

Der Nachteil dieses Verfahrens besteht in den hohen Aufwendungen, den die jeweils typenspezifisch anzufertigenden Schweißvorrichtungen erfordern. Insbesondere müssen die beiden Elektroden der jeweiligen Geometrie des Produkts angepasst werden. Die hohe Typen- und Variantenvielfalt bei oft nur vergleichsweise geringen Stückzahlen führt daher zu erheblichen Fixkosten, die bei dem hohen Preisdruck häufig durch die Produkte selbst nicht getragen werden können.

Um diesen Nachteil zu beseitigen, werden in der europäischen Patentschrift EP 2 473 313 B1 und der prioritätsbegründenden deutschen Patentanmeldung DE 10 2009 040 083 A1 ein Verfahren zum Verschweißen von im Fügebereich eine Punkt- oder kurze Linienberührung aufweisenden Teilen vorgeschlagen, bei dem ein Laserstrahl eingesetzt wird. Zwar wird dadurch ermöglicht, dass ein Verschweißen der zumindest im Fügebereich drahtförmigen Teile zu einer nahezu beliebigen Geometrie mit einem im Vergleich zum Widerstands- bzw. Kondensatorentladungsschweißen deutlich geringeren Aufwand ermöglicht wird, doch verbleibt der Nachteil, dass das Einlegen eines bzw. mehrerer Ringe in eine Vorrichtung arbeitsintensiv und zeitaufwändig ist.

Des Weiteren sind aus der europäischen Patentanmeldung EP 1 262 257 A2 eine Querdrahtzuführung für eine Gitterschweißmaschine, aus der deutschen Offenlegungsschrift DE 19 47 144 A eine Zubringeinrichtung für eine Drahtgitterschweißmaschine, und aus dem deutschen Gebrauchsmuster DE 72 21 102 U eine Einlegevorrichtung zum Einlegen von Drähten in Drahtschweißschablonen, aus der japanischen Patentanmeldung JP H06 126678 A eine Halterung für zylindrische Container, aus der US-amerikanischen Patentanmeldung US 1 528 796 A und aus der englischen Patentanmeldung GB 904 055 A ein Magnethalter bekannt, die den gemeinsamen Nachteil aufweisen, dass sie technisch sehr aufwändig sind.

Daher ist es Aufgabe der Erfindung, eine Vorrichtung und ein Verfahren zur Verfügung zu stellen, wodurch die Nachteile des Standes der Technik beseitigt werden.

### Die Erfindung und ihre Vorteile

Die Vorrichtung zur Übergabe mindestens eines Ringes in eine Haltevorrichtung, mit den Merkmalen des Anspruchs 1, die erfindungsgemäße Haltevorrichtung für mindestens einen an mindestens einer Strebe (z.B. Ringstrebe, Tragstrebe) zu fixierenden Ring, mit den Merkmalen des Anspruchs 8, und das erfindungsgemäße Verfahren zum Positionieren mindestens eines Ringes an mindestens einer Strebe (z.B. Ringstrebe, Tragstrebe), mit den Merkmalen des Anspruchs 10, haben demgegenüber den Vorteil, dass ein aufwändiges manuelles Einlegen der Ringe in eine Vorrichtung wesentlich vereinfacht und dadurch auch zeitlich verkürzt wird und ein positionsgenaues Anordnen eines Ringes an einer Strebe, welches durch Magnetkraft unterstützt wird, ermöglicht wird.

Nach einer vorteilhaften Ausgestaltung der erfindungsgemäßen Vorrichtung, die eine eine Längsachse aufweisende Krone aufweist, an der mindestens zwei Spreizarme angeordnet sind, an denen mindestens ein in die Haltevorrichtung zu übergebender Ring anordbar ist, weist mindestens ein Spreizarm ein der Krone zugewandtes Ende und mindestens ein der Krone abgewandtes Ende auf.

Nach einer zusätzlichen vorteilhaften Ausgestaltung der erfindungsgemäßen Vorrichtung weist die Vorrichtung eine Auflageplatte mit mindestens zwei Spreizarm-Aussparungen und/oder mit einer Kronen-Aussparung auf.

Nach einer zusätzlichen vorteilhaften Ausgestaltung der erfindungsgemäßen Vorrichtung ist mindestens ein Spreizarm beweglich an der Krone angeordnet.

Nach einer diesbezüglichen vorteilhaften Ausgestaltung der erfindungsgemäßen Vorrichtung ist mindestens ein Spreizarm stufenlos oder stufenweise beweglich an der Krone angeordnet.

Nach einer zusätzlichen vorteilhaften Ausgestaltung der erfindungsgemäßen Vorrichtung ist mindestens ein Spreizarm Teil eines Spreizmechanismuses und weist mindestens ein Ende, das zum Aufspreizen von der Längsachse der Krone wegbewegbar ist und zum Schließen zu der Längsachse der Krone hinbewegbar, auf.

Nach einer zusätzlichen vorteilhaften Ausgestaltung der erfindungsgemäßen Vorrichtung ist die Krone auf seiner Längsachse beweglich angeordnet.

Nach einer zusätzlichen vorteilhaften Ausgestaltung der erfindungsgemäßen Vorrichtung ist mindestens ein Ring ein geschlossener Ring ist und/oder mindestens ein Ring ein spiralförmiger Ring.

Nach einer zusätzlichen vorteilhaften Ausgestaltung der erfindungsgemäßen Vorrichtung weist mindestens ein Ring ein rotationssymmetrisches Querschnittsprofil und/oder mindestens ein Ring ein nicht rotationssymmetrisches Querschnittsprofil auf.

Nach einer zusätzlichen vorteilhaften Ausgestaltung der erfindungsgemäßen Vorrichtung sind an den Spreizarmen mindestens zwei Ringe konzentrisch angerordnet.

Nach einer diesbezüglichen vorteilhaften Ausgestaltung der erfindungsgemäßen Vorrichtung ist ein Mittelpunkt der konzentrischen Ringe auf der Längsachse der Krone angeordnet.

Nach einer zusätzlichen vorteilhaften Ausgestaltung der erfindungsgemäßen Vorrichtung ist ein Ring ein Gitterring für ein Schutzgitter eines Lüfters.

Nach einer zusätzlichen vorteilhaften Ausgestaltung der erfindungsgemäßen Vorrichtung ist die Vorrichtung an ein Handhabungsgerät anordbar. Bevorzugt ist das Handhabungsgerät lösbar an der Vorrichtung angeordnet, wodurch es z.B. auch bei anderen erfindungsgemäßen Vorrichtungen eingesetzt werden kann.

Nach einer diesbezüglichen vorteilhaften Ausgestaltung der erfindungsgemäßen Vorrichtung ist das Handhabungsgerät ein Roboter.

Nach einer vorteilhaften Ausgestaltung der erfindungsgemäßen Haltevorrichtung, die zur Positionierung mindestens eines Ringes an mindestens einer Strebe mindestens eine radial angeordnete Magnetleiste (z.B. Permanentmagnet, Elektromagnet) aufweist, weist die Haltevorrichtung zur Positionierung mindestens eines Ringes an mindestens einer Strebe mindestens eine Kammleiste auf.

Nach einer zusätzlichen vorteilhaften Ausgestaltung der erfindungsgemäßen Haltevorrichtung weist die Haltevorrichtung zur Verbindung eines Ringes an einer Strebe eine Schweißvorrichtung auf.

Nach einer diesbezüglichen vorteilhaften Ausgestaltung der erfindungsgemäßen Haltevorrichtung ist mindestens ein Ring durch eine Vorrichtung zur Übergabe mindestens eines Ringes in eine Haltevorrichtung, gemäß einem der Ansprüche 1 bis 7, in die Haltevorrichtung übergebbar.

Nach einer vorteilhaften Ausgestaltung des erfindungsgemäßen Verfahrens, bei dem mindestens ein Ring händisch durch eine Bedienperson oder mittels einer Vorrichtung zur Übergabe mindestens eines Ringes in eine Haltevorrichtung in die Haltevorrichtung eingelegt wird und der eingelegte Ring durch mindestens eine Magnetleiste an mindestens einer Strebe positioniert wird, wird der eingelegte Ring zusätzlich durch mindestens eine Kammleiste an mindestens einer Strebe positioniert.

Nach einer zusätzlichen vorteilhaften Ausgestaltung des erfindungsgemäßen Verfahrens weist die Vorrichtung zur Übergabe mindestens eines Ringes in eine Haltevorrichtung einen Spreizmechanismus, der an einer Krone angeordnet ist, auf, der durch stufenweises oder kontinuierliches Schließen den oder die Ringe sequentiell, ausgehend vom größten Ringdurchmesser bis zum kleinsten Ringdurchmesser an die Haltevorrichtung lagerichtig übergibt.

Nach einer zusätzlichen vorteilhaften Ausgestaltung des erfindungsgemäßen Verfahrens wird vor der Übergabe mindestens eines Ringes an die Haltevorrichtung die Vorrichtung zur Übergabe mindestens eines Ringes in eine Haltevorrichtung händisch von einer Bedienperson mit mindestens einem Ring bestückt und/oder wird entweder ein Ring durch Eintauchen der Krone in den Ring oder mehrere flächig bereitgestellte Ringe durch Eintauchen der Krone in den kleinsten Einzelring und vorheriges oder während des Eintauchens erfolgendes Aufspreizen des Spreizmechanismuses aufgenommen oder ein Ring durch Eintauchen des Spreizmechanismuses in den Ring oder mehrere flächig bereitgestellte Ringe durch Eintauchen des Spreizmechanismuses in den kleinsten Einzelring und vorheriges oder während des Eintauchens erfolgendes Aufspreizen des Spreizmechanismuses aufgenommen.

Nach einer zusätzlichen vorteilhaften Ausgestaltung des erfindungsgemäßen Verfahrens wird zum Verbinden eines Ringes mit einer Strebe an einer zwischen dem Ring und der Strebe vorhandenen Fügestelle eine Schweißvorrichtung (z.B. Widerstands-, Kondensatorentladungsschweißvorrichtung, Laserschweißvorrichtung odgl.) eingesetzt.

Nach einer diesbezüglichen vorteilhaften Ausgestaltung des erfindungsgemäßen Verfahrens werden während des Schweißprozesses der Ring und die Strebe gegeneinander gedrückt, so dass sie sich beim Schweißprozess aufeinander zu bewegen.

Nach einer zusätzlichen vorteilhaften Ausgestaltung des erfindungsgemäßen Verfahrens werden während des Schweißprozesses der Ring und die Strebe aufgrund der mindestens einen Magnetleiste und/oder mittels Federkraft gegeneinander gedrückt, so dass auf die miteinander zu verschweißenden Teile eine Nachsetzkraft aufgebracht wird. Im zusammengedrückten Zustand liefern diese die erforderliche Vorspannung der Teile, so dass sich die Teile infolge der Ausbildung der Schmelzzone einander annähern, wobei bevorzugt die Nachsetzkraft bis zum Erstarren des aufgeschmolzenen Materials gehalten wird.

Nach einer zusätzlichen vorteilhaften Ausgestaltung des erfindungsgemäßen Verfahrens dringt während des Schweißprozesses der aufgeschmolzene Bereich des Ringes in das durch den Wärmeintrag dieser Schmelze inzwischen ebenfalls aufgeschmolzene Material der Strebe ein.

Nach einer zusätzlichen vorteilhaften Ausgestaltung des erfindungsgemäßen Verfahrens wird zum Schweißen ein Laserstrahl eingesetzt. Bei der Laserschweißtechnologie, die schon lange bekannt ist und in den verschiedensten Anwendungsgebieten auch ohne Verwendung von Zusatzwerkstoff erfolgreich eingesetzt wird, besteht das Problem, dass z.B. Verbindungen von sich kreuzenden drahtförmigen Teilen, also solchen Teilen, die in ihrem Kreuzungspunkt und damit in ihrem Fügebereich lediglich eine punkt-, oder allenfalls eine kurze linienförmige Berührung aufweisen, qualitätsgerecht nur schwierig herzustellen sind. Bekannt ist nämlich, dass beim Verschweißen von Teilen mittels einer Laserstrahlquelle ohne Zusatzwerkstoff die beiden Teile dicht aufeinander liegen müssen, d. h. der Laserstrahl die Materialien in der Grenzzone nur dann zum Aufschmelzen bringt, wenn zwischen den Teilen kein nennenswerter Luftspalt vorhanden ist. Das ist jedoch z.B. bei drahtförmigen Teilen, die miteinander verschweißt werden sollen, nicht gegeben. Hier ist lediglich eine punktförmige Kontaktstelle vorhanden, rechts und links von dieser befindet sich Luft. Auch die kurze linienförmige Berührung, beispielsweise bei der Verbindung von Drahtringen auf einer einen rechteckigen Querschnitt aufweisenden Tragstrebe, ist für das Laserschweißen nicht ausreichend.

Damit das vorteilhafte Laserschweißen trotzdem auch zum Verschweißen von drahtförmigen Teilen angewendet werden kann, wird bei dem erfindungsgemäßen Verfahren das Laserschweißgerät oberhalb des Kreuzungspunktes positioniert. Der Laserstrahl geht durch das obere Teil (z.B. Ring) bis zum Kreuzungspunkt hindurch und schmilzt das Material im Brennpunkt, der oberhalb der Fügestelle aber immer noch innerhalb des oberen Teils fokussiert wird, auf. Durch das Hindurchführen des Laserstrahls durch das obere Teil wird vermieden, dass seine Energie durch einen etwaigen Spalt verringert wird. Vielmehr trifft er von innen her exakt auf die Kreuzungsstelle. Um zu verhindern, dass das Material dabei aus dem "offen angeschmolzenen" oberen Teil wegläuft, wird dieses Teil nur im mittleren Bereich seines Querschnitts aufgeschmolzen, während an den beiden Flanken keine Aufschmelzung stattfindet, so dass das flüssige Material in einer Art Mikroschmelze im Querschnitt eingeschlossen ist, wobei jedoch in der Berührungszone bereits ein Wärmeeintrag in das untere Teil (z.B. Ringstrebe) erfolgt, dessen Material an dieser Stelle zumindest im Grenzbereich zur Fügestelle aufschmilzt.

Daher ist es besonders wichtig, dass in dieser Phase des Aufschmelzens des Materials des oberen und unteren Teils der Laserschweißvorgang noch durch ein leichtes Gegeneinander Drücken der drahtförmigen Teile begleitet wird, das jedoch außerhalb des Kreuzungspunktes, d. h. der Fügestelle, eingeleitet wird. Dazu werden durch seitlich der Fügestelle angreifende Nachsetzkräfte, die durch die Magnetkraft der Magnetleiste gegeben sind, die Teile unter eine leichte Vorspannung gesetzt, unter der sie sich geringfügig aufeinander zu bewegen. Die Krafteinleitung beim Gegeneinander Drücken erfolgt somit seitlich der Fügestelle und somit außerhalb der Eintrittsstelle des Lasers in das obere Teil. Dadurch braucht lediglich diese separate Einrichtung an die Form des Endprodukts angepasst zu werden, wodurch sich die Kosten der Gesamtvorrichtung im Vergleich zu Kondensatorentladungsschweißvorrichtungen deutlich reduzieren. Durch die Vorspannung vergrößert sich die aufgeschmolzene Zone und damit die Berührungsfläche der beiden Teile wesentlich. Bei entsprechender Materialpaarung bildet sich eine ausgeprägte Schweißnuss aus, die wiederum für eine qualitativ gute Schweißverbindung spricht. Die hier aufzubringenden Nachsetzkräfte sind deutlich geringer als die beim Kondensatorentladungsschweißen benötigten Andrucckräfte, da hier lediglich die Berührung der beiden Teile und das "Nachsetzen" des oberen Teils in das aufgeschmolzene Material des unteren Teils hinein erreicht werden muss. Die Nachsetzkräfte müssen bis zur Erstarrung des Materials in der Fügestelle aufrechterhalten werden.

Bevorzugt wird der Laserstrahl orthogonal auf die zu fügenden Teile gelenkt. Dadurch ist gewährleistet, dass exakt der mittig über deren Berührungsstelle liegende Bereich des oberen Teils aufgeschmolzen wird.

Bevorzugt wird der Laserstrahl durch einen Scanner gesteuert, der die Koordinaten der Fügestellen erfasst. Dadurch wird die Fertigungszeit von Erzeugnissen mit einer Vielzahl von Fügestellen, wie z. B. Drahtgitter, wesentlich verkürzt.

Unabhängig davon, welches Schweißverfahren verwendet wird, können nach dem Erstarren der Schmelze in der Fügestelle zusätzlich noch die Kehlbereiche der Fügestelle ein- oder mehrseitig verschweißt werden. Zur Herstellung einer solchen Seitenverschweißung wird z.B. mit dem Laserstrahl, ausgehend vom Drahtinneren, ein Teil des noch stehenden Querschnitts des oberen drahtförmigen Teils angeschmolzen, ohne jedoch die Teile weiter aufeinander zuzubewegen. Zur Herstellung mehrerer Seitenverschweißungen wird dieser Vorgang nach einer radialen Verstellung des Laserstrahls wiederholt. Seitenverschweißungen vergrößern den Anbindungsquerschnitt der Teile in der Fügezone und erhöhen damit die Festigkeit der Schweißverbindung.

Nach einer zusätzlichen vorteilhaften Ausgestaltung des erfindungsgemäßen Verfahrens schmilzt der Laserstrahl von oben und zentriert zur Fügestelle in den Ring so eingebracht wird, dass lediglich ein innerer Bereich unmittelbar über der Fügestelle auf.

Nach einer zusätzlichen vorteilhaften Ausgestaltung des erfindungsgemäßen Verfahrens wird als Vorrichtung eine Vorrichtung zur Übergabe mindestens eines Ringes in eine Haltevorrichtung, gemäß einem der Ansprüche 1 bis 7, und/oder als Haltevorrichtung eine Haltevorrichtung, gemäß einem der Ansprüche 8 oder 9, eingesetzt.

Weitere Vorteile und vorteilhafte Ausgestaltung der Erfindung sind der nachfolgenden Beschreibung, den Ansprüchen und den Zeichnungen entnehmbar.

### Zeichnung

Bevorzugte Ausführungsbeispiele der Erfindung sind in der Zeichnung dargestellt und werden im Folgenden näher erläutert. Es zeigen:
- Fig. 1: ein Schutzgitter, das erfindungsgemäß hergestellt werden kann,

- Fig. 2: eine Auflageplatte mit durch eine Bedienperson flächig ausgebreiteten Ringen,
- Fig. 3: ein Ausschnitt einer Auflageplatte mit durch eine Bedienperson flächig ausgebreiteten Ringen,
- Fig. 4: eine erfindungsgemäße Vorrichtung zur Übergabe mindestens eines Ringes in eine Haltevorrichtung,
- Fig. 5: eine erfindungsgemäße Vorrichtung zur Übergabe mindestens eines Ringes in eine Haltevorrichtung,
- Fig. 6: eine erfindungsgemäße Vorrichtung zur Übergabe mindestens eines Ringes in eine Haltevorrichtung,
- Fig. 7: einen Ausschnitt einer erfindungsgemäßen Vorrichtung zur Übergabe mindestens eines Ringes in eine Haltevorrichtung,
- Fig. 8: einen Ausschnitt einer erfindungsgemäßen Vorrichtung zur Übergabe mindestens eines Ringes in eine Haltevorrichtung,
- Fig. 9: einen Ausschnitt einer erfindungsgemäßen Vorrichtung zur Übergabe mindestens eines Ringes in eine Haltevorrichtung,
- Fig. 10: eine erfindungsgemäße Haltevorrichtung für mindestens einen an mindestens einer Strebe zu fixierenden Ring mit einer erfindungsgemäße Vorrichtung zur Übergabe mindestens eines Ringes in eine Haltevorrichtung,
- Fig. 11: einen Ausschnitt einer erfindungsgemäßen Haltevorrichtung für mindestens einen an mindestens einer Strebe zu fixierenden Ring,
- Fig. 12: einen Ausschnitt einer erfindungsgemäßen Haltevorrichtung für mindestens einen an mindestens einer Strebe zu fixierenden Ring,
- Fig. 13: einen Ausschnitt einer erfindungsgemäß erfindungsgemäßen Haltevorrichtung für mindestens einen an mindestens einer Strebe zu fixierenden Ring,
- Fig. 14: einen Ausschnitt einer erfindungsgemäßen Haltevorrichtung für mindestens einen an mindestens einer Strebe zu fixierenden Ring und
- Fig. 15: eine Draufsicht auf eine erfindungsgemäße Haltevorrichtung für mindestens einen an mindestens einer Strebe zu fixierenden Ring.

### Beschreibung der Ausführungsbeispiele

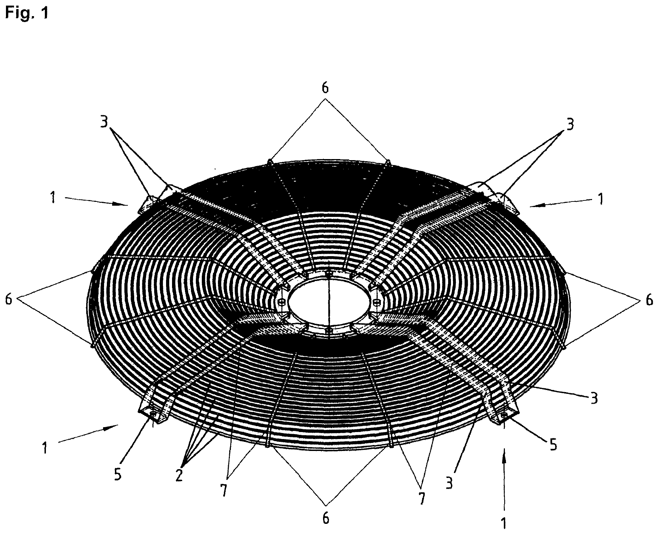

Fig. 1 zeigt ein räumliches Schutzgitter für einen Lüfter, das aus vier Tragstreben 1 besteht, auf die konzentrische Ringe in Form von Gitterringen 2 aufgeschweißt sind. Jede Tragstrebe 1 besteht aus zwei parallel geführten, zweimal über die hohe Kante mit unterschiedlichen Winkeln abgewinkelten Flachprofilen 3, deren innere Enden mit einem inneren Flanschring 4 und deren äußere Enden zu einem äußeren Flanschring 5 miteinander verbunden sind. Zwischen den Tragstreben 1 sind in gleicher Teilung jeweils zwei Streben in Form von Ringstreben 6 bzw. Rundstreben angeordnet. Die Gitterringe 2 sind jeweils an ihren Kreuzungspunkten mit den Flachprofilen 3 und den Ringstreben 6 durch Laserschweißen miteinander verschweißt. Der Einfachheit halber wird auch die kurze Linienberührung zwischen Gitterring 2 und Flachprofil 3 als ein Kreuzungspunkt angesehen. Beide Kreuzungspunkte können auch als Fügestelle 7 bezeichnet werden.

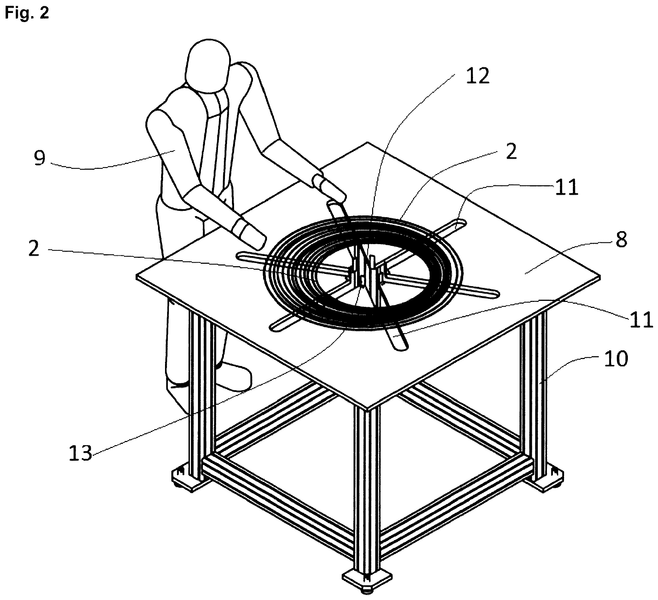

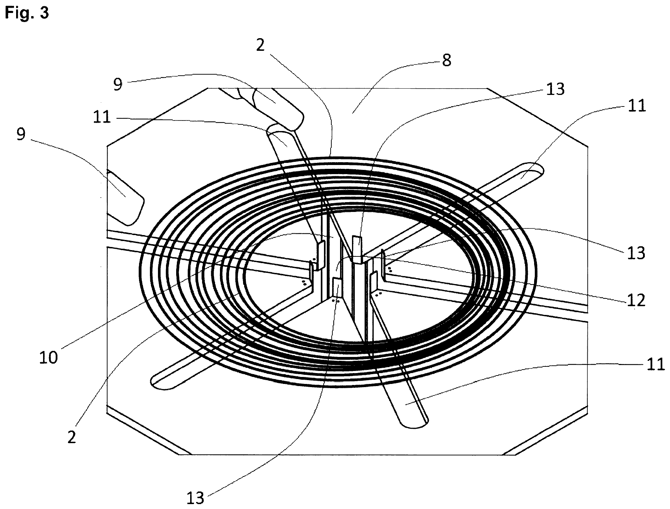

Die Fig. 2 und die Fig. 3 zeigen eine Auflageplatte 8 mit durch eine Bedienperson 9 flächig ausgebreiteten Ringen (Gitterringen 2). Die Auflageplatte 8 ist an einem bevorzugt höhenverstellbaren Gestell 10 angeordnet und weist Spreizarm-Aussparungen 11, eine mittig angeordnete Kronen-Aussparung 12 und Kronen-Führungen 13 auf.

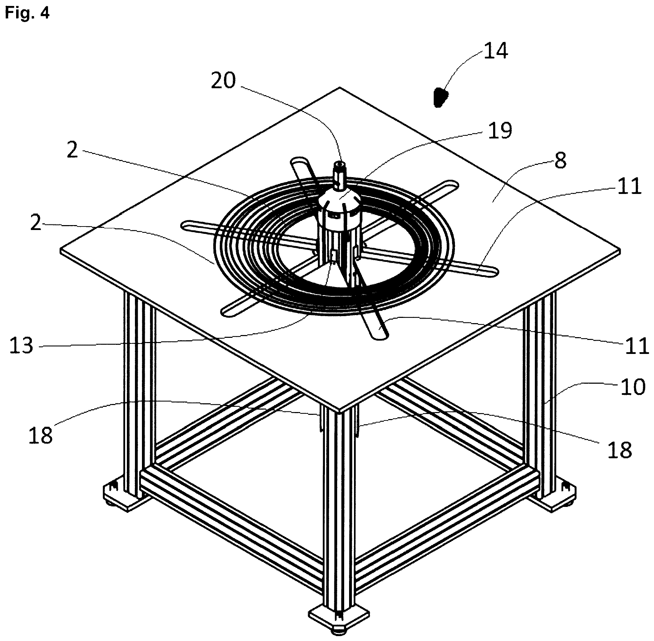

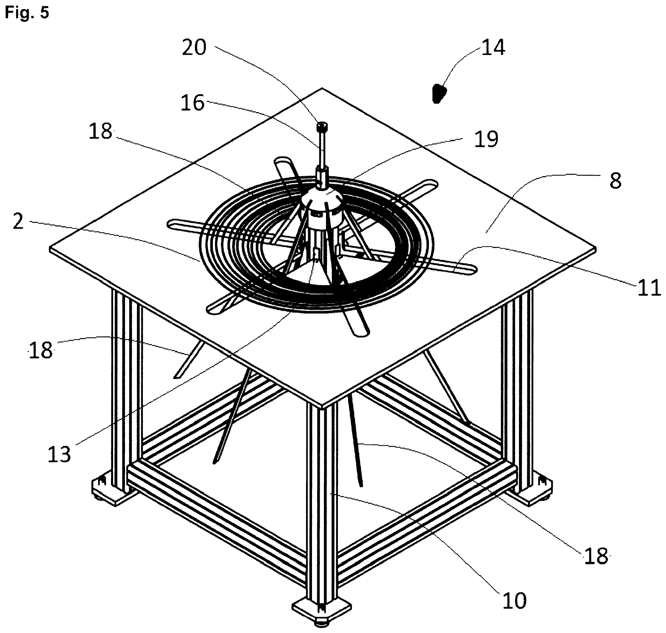

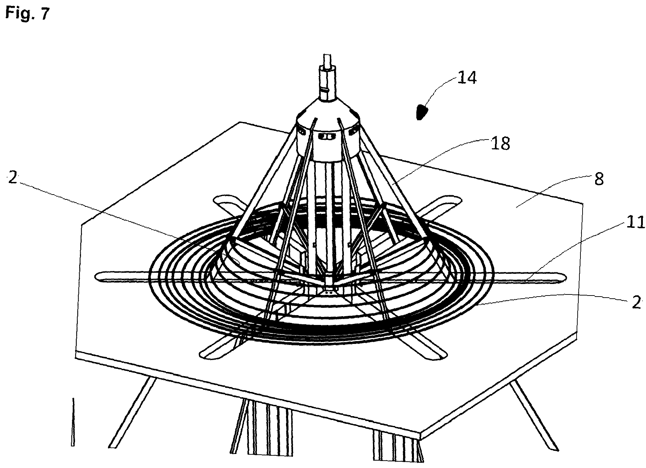

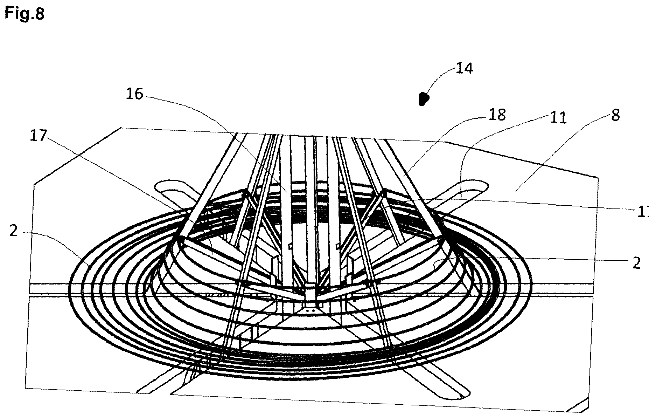

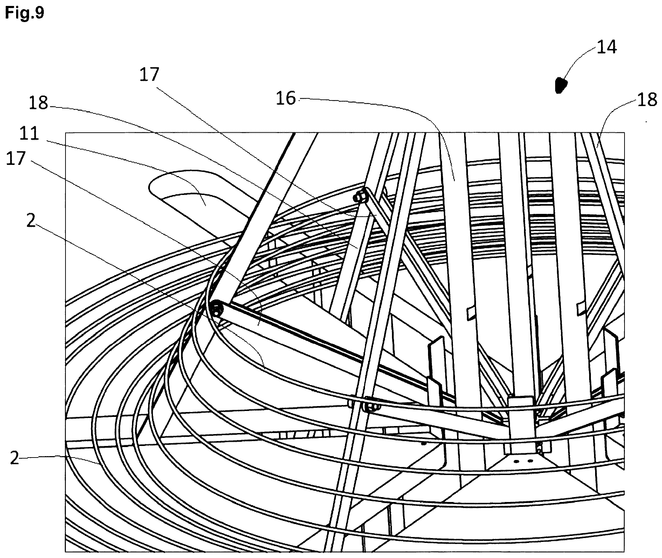

Die Fig. 4 bis Fig. 9 zeigen verschiedene Ansichten einer erfindungsgemäßen Vorrichtung 14 zur Übergabe mindestens eines Ringes (Gitterringes 2) in eine Haltevorrichtung. Die Vorrichtung 14 weist bevorzugt einen Spreizmechanismus auf, der insbesondere aus einem Schieber 15, der verschieblich an einer Achse 16, die eine Längsachse aufweist, angeordnet ist, beweglich an dem Schieber 15 angeordneten Stangen 17 und Spreizarmen 18, die an einer Krone 19, die eine zur Achse 16 koaxiale Längsachse aufweist, und den Stangen 17 beweglich angeordnet sind, besteht. Denkbar wäre auch, dass nicht der Schieber 15 sondern die Krone 19 verschieblich an der Achse 16 angeordnet ist oder dass sowohl der Schieber 15 als auch die Krone 19 verschieblich an der Achse 16 angeordnet sind.

Zur Aufnahme der flächig bereitgestellten Ringe (Gitterringe 2) taucht die Spreizmechanismus in den kleinsten Ring (Gitterring 2) ein. Dabei kann das Eintauchen des Spreizmechanismuses von unten durch die Auflageplatte 8, so dass die Krone 19 von unten durch die Kronen-Aussparung 12 geführt wird, mit geschlossenem oder zumindest etwas aufgespreiztem Spreizmechanismuses oder von oben durch die Auflagenplatte 8, so dass der geschlossene Spreizmechanismus mit den Spreizarmen 18 voran in den kleinsten Ring (Gitterring 2) eintaucht, erfolgen. Bevorzugt wird der Spreizmechanismus dabei von einem nicht dargestellten Handhabungsgerät (z.B. Roboter) geführt, das beispielsweise lösbar an einem Anbaubereich 20 anordbar ist. Denkbar ist auch, dass zusätzlich oder alternativ zur Bewegung des Spreizmechanismuses die Auflageplatte 8 angehoben oder abgesenkt wird.

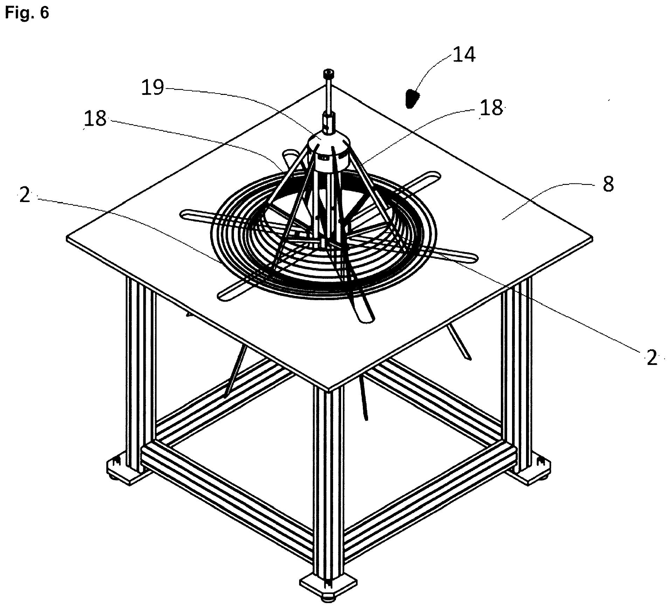

Durch das Aufspreizen der Spreizarme 18 werden, wie in den Fig. 6 bis Fig. 9 ersichtlich, beginnend mit dem kleinsten Ring (Gitterring 2) nach und nach die flächig bereitgestellten Ringe (Gitterringe 2) auf der Auflageplatte 8 ausgerichtet und durch den Spreizmechanismus nach und nach aufgenommen, so dass die flächig bereitgestellten Ringe (Gitterringe 2) von der Auflageplatte 8 durch selbständiges Gleiten der Ringe (Gitterringe 2) auf den Spreizarmen 18, durch Bewegung des Spreizmechanismuses auf der Längsachse der Achse 16 und/oder durch Bewegung der Auflageplatte 8 abgehoben werden. Nach dem vollständigen Aufnehmen der Ringe (Gitterringe 2) durch den Spreizmechanismus sind die Ringe (Gitterringe 2) konzentrisch an dem Spreizmechanismus angeordnet. Denkbar ist auch, dass die Vorrichtung 14 bzw. deren Spreizmechanismus oder zumindest Teile des Spreizmechanismuses während und/oder nach der Aufnahme der Ringe zumindest zeitweilig in Vibration versetzt wird bzw. werden, wodurch die konzentrische Anordnung eines Ringes bzw. der Ringe an dem Spreizmechanismus unterstützt wird. Nachdem die Vorrichtung 14 alle Ringe (Gitterringe 2) durch ihren Spreizmechanismus aufgenommen hat, wird die Vorrichtung 14 zu der Haltevorrichtung bewegt und an dieser positioniert.

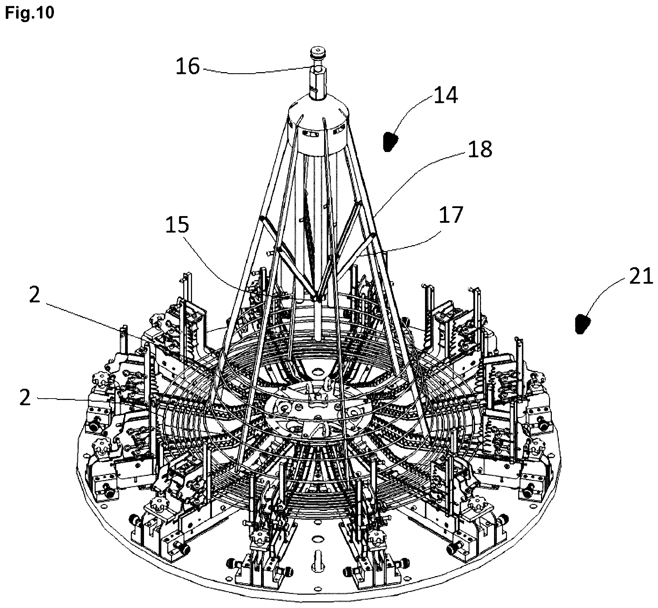

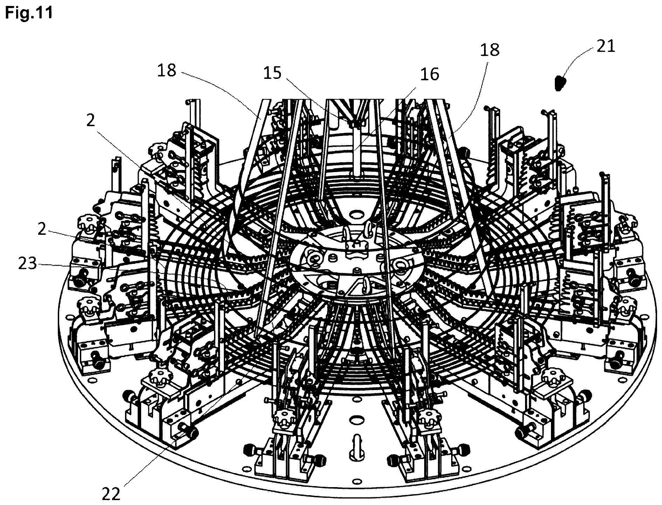

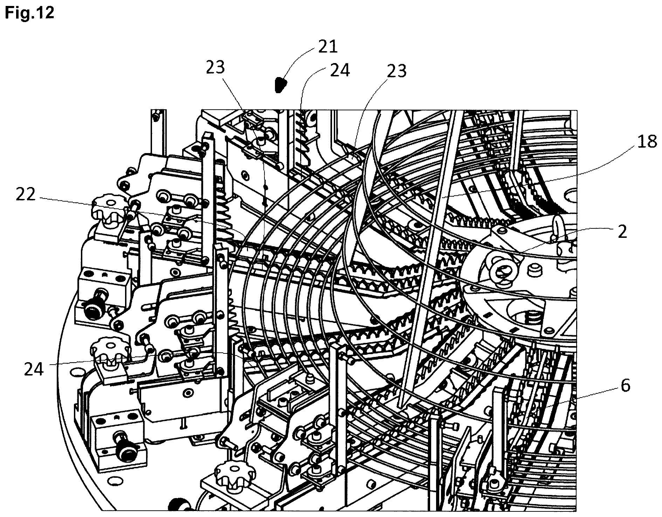

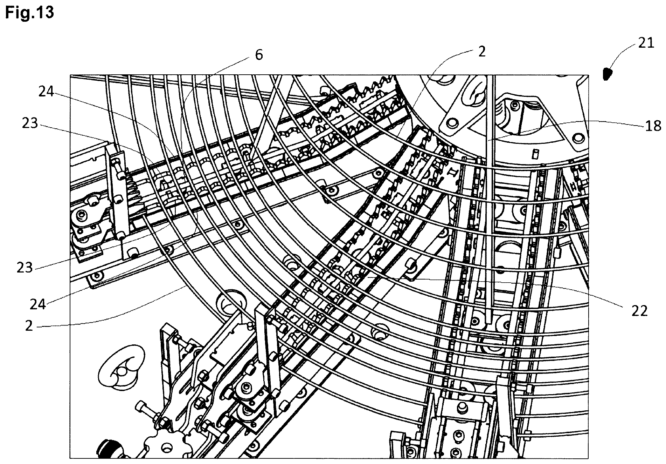

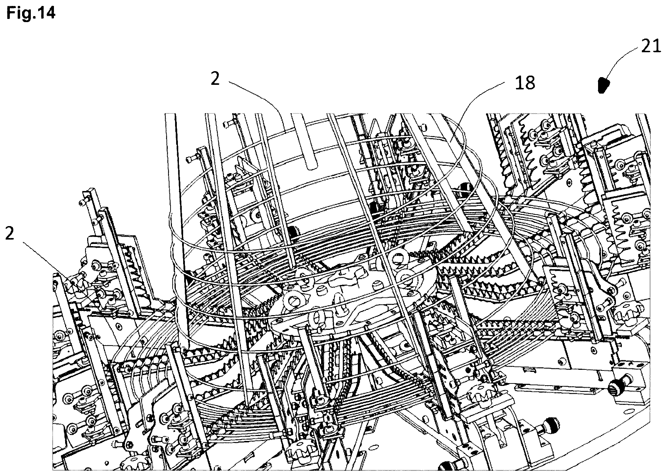

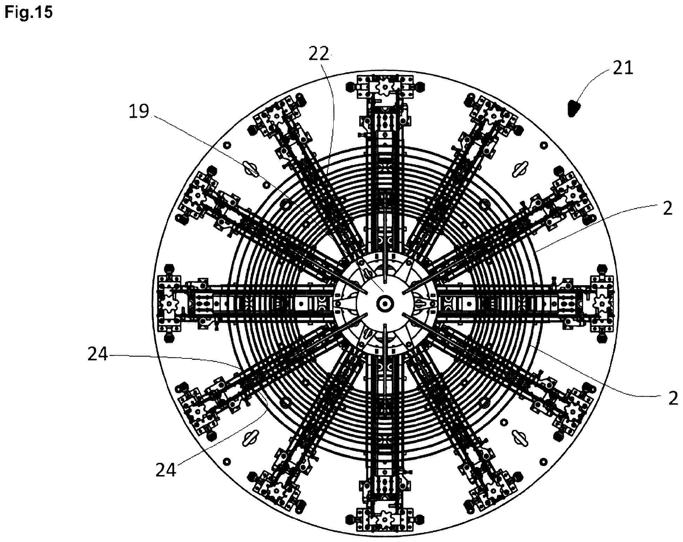

Die Fig. 10 bis Fig. 15 zeigen verschiedene Ansichten der erfindungsgemäßen Haltevorrichtung 21 für mindestens einen an mindestens einer Strebe (z.B. Ringstrebe 6) zu fixierenden Ring (Gitterring 2) mit einer erfindungsgemäßen Vorrichtung 14 zur Übergabe mindestens eines Ringes (Gitterringes 2) in die Haltevorrichtung 21. Die Übergabe eines Ringes (Gitterringes 2) in die Haltevorrichtung 21 erfolgt durch stufenweises oder auch kontinuierliches Schließen des Spreizmechanismuses, wodurch die Ringe (Gitterringe 2) sequentiell, ausgehend vom größten Ringdurchmesser bis zum kleinsten Ringdurchmesser an die Vorrichtung lagerichtig übergeben werden.

Die Haltevorrichtung 21 weist je Strebe (z.B. Ringstrebe 6) zwei Kammleisten 22 auf, deren Zinken 23 am freien Ende angeschrägt sind, wobei die Strebe (z.B. Ringstrebe 6) zwischen diesen Kammleisten 22 eingelegt ist. Dieses positionsgenaue Anordnen eines Ringes (Gitterringes 2) an einer Strebe (z.B. Ringstrebe 6), wird noch durch Magnetleisten 24 unterstützt, die neben den Kammleisten 22 angeordnet sind und den einzulegenden Ring (Gitterring 2) mittels der Magnetkraft in den Kammleisten 22 in die lagerichtige Position, in der sich der Ring (Gitterring 2) und die Strebe (z.B. Ringstrebe 6) an der Fügestelle 7 berühren, ziehen.

Bei dem anschließenden Schweißprozesses mittels einer nicht dargestellten Schweißvorrichtung werden der Ring (Gitterring 2) und die Strebe (z.B. Ringstrebe 6) aufgrund der Magnetleisten 24 gegeneinander gedrückt, so dass auf die miteinander zu verschweißenden Teile eine Nachsetzkraft aufgebracht wird und sich die zu verschweißenden Teile während des Schweißvorganges aufeinander zubewegen können, so dass z.B. allenfalls am Ende des Schweißvorganges der Ring (Gitterring 2) die Magnetleisten 24 berührt. Um diese Bewegungsfreiheit des Ringes (Gitterringes 2) in der lagerichtigen Position zu ermöglichen, sind zwischen den Zinken 23 liegende Zahnlücken, die sich bevorzugt auf die Dicke des zu positionierenden Ringes (Gitterringes 2) verengen, an ihrem Zahngrund mit einem elastischen Material versehen oder ist der Ring (Gitterring 2) in der lagerichtigen Position beabstandet zum Zahngrund positioniert. Denkbar ist auch, dass die Strebe (z.B. Ringstrebe 6) mit einer Feder belastet ist, so dass die Federkraft die nachgiebige Strebe (z.B. Ringstrebe 6) gegen den Ring (Gitterring 2) drückt und/oder dass die Magnetleisten 24 mit einer Feder belastet sind, so dass ein Ring (Gitterring 2), der auf der Strebe (z.B. Ringstrebe 6) aufliegt und die Magnetleisten 24 berührt oder zu diesen beabstandet angeordnet ist, während des Schweißvorganges durch die Magnetkraft den nachgiebigen Magnetleisten 24 folgt, wodurch der Ring (Gitterring 2) gegen die Strebe (z.B. Ringstrebe 6) drückt.

### Bezugszahlenliste

- 1: Tragstrebe
- 2: Gitterring
- 3: Flachprofil
- 4: Innerer Flanschring
- 5: Äußerer Flanschring
- 6: Ringstrebe
- 7: Fügestelle
- 8: Auflageplatte
- 9: Bedienperson
- 10: Gestell
- 11: Spreizarm-Aussparung
- 12: Kronen-Aussparung
- 13: Kronen-Führung
- 14: Vorrichtung
- 15: Schieber
- 16: Achse
- 17: Stange
- 18: Spreizarm
- 19: Krone
- 20: Anbaubereich
- 21: Haltevorrichtung
- 22: Kammleiste
- 23: Zinken
- 24: Magnetleiste

## Patentansprüche

1. Vorrichtung (14) zur Übergabe mindestens eines Ringes in eine Haltevorrichtung (21),
**dadurch gekennzeichnet,**
**dass** die Vorrichtung (14) einen Spreizmechanismus aufweist, der aus einem Schieber (15), beweglich an dem Schieber (15) angeordneten Stangen (17) und mindestens zwei Spreizarmen (18), die an einer eine Längsachse aufweisenden Krone (19) und den Stangen (17) beweglich angeordnet sind, besteht, wobei der Schieber (15) und/oder die Krone (19), deren Längsachse koaxial zu einer Achse (16) ist, verschieblich an der Achse (16) angeordnet sind und wobei an den Spreizarmen (18) mindestens ein in die Haltevorrichtung (21) zu übergebender Ring derart anordbar ist, dass ein an den Spreizarmen (18) angeordneter Ring auf den Spreizarmen (18) gleiten kann.

2. Vorrichtung (14), nach Anspruch 1,
**dadurch gekennzeichnet,**
**dass** mindestens ein Spreizarm (18) ein der Krone (19) zugewandtes Ende und mindestens ein der Krone (19) abgewandtes Ende aufweist.

3. Vorrichtung (14), nach Anspruch 1 oder Anspruch 2,
**dadurch gekennzeichnet,**
**dass** die Vorrichtung (14) eine Auflageplatte (8) mit mindestens zwei Spreizarm-Aussparungen (11) und/oder mit einer Kronen-Aussparung (12) aufweist.

4. Vorrichtung (14), nach einem der vorhergehenden Ansprüche,
**dadurch gekennzeichnet,**
**dass** mindestens ein Spreizarm (18) stufenlos oder stufenweise beweglich an der Krone (19) angeordnet ist.

5. Vorrichtung (14), nach Anspruch 4,
**dadurch gekennzeichnet,**
**dass** mindestens ein Spreizarm (18) mindestens ein Ende aufweist, das zum Aufspreizen von der Längsachse der Krone (19) wegbewegbar ist und zum Schließen zu der Längsachse der Krone (19) hinbewegbar ist.

6. Vorrichtung (14), nach einem der vorhergehenden Ansprüche,
**dadurch gekennzeichnet,**
**dass** die Vorrichtung (14) einen Anbaubereich (20) für ein Handhabungsgerät aufweist.

7. Vorrichtung (14), nach Anspruch 6,
**dadurch gekennzeichnet,**
**dass** der an der Vorrichtung (14) angeordnete Anbaubereich (20) ein Anbaubereich (20) für einen Roboter ist.

8. Haltevorrichtung (21) für mindestens einen an mindestens einer in die Haltevorrichtung (21) einlegbaren Strebe zu fixierenden Ring, wobei die Haltevorrichtung (21) mindestens zwei Kammleisten (22) zwischen denen mindestens eine Strebe eingelegt werden kann, aufweist, **gekennzeichnet durch** mindestens eine Magnetleiste (24), die neben der Kammleisten angeordnet ist.

9. Haltevorrichtung (21), nach Anspruch 8,
**dadurch gekennzeichnet,**
**dass** die Haltevorrichtung (21) zur Verbindung eines Ringes an einer Strebe eine Schweißvorrichtung aufweist.

10. Verfahren zum Positionieren mindestens eines Ringes an mindestens einer Strebe, wobei mindestens ein Ring händisch durch eine Bedienperson oder mittels einer Vorrichtung (14) zur Übergabe mindestens eines Ringes in eine Haltevorrichtung (21) in die Haltevorrichtung (21) eingelegt wird **dadurch gekennzeichnet, dass** der eingelegte Ring durch mindestens eine Magnetleiste (24) an mindestens einer Strebe positioniert wird.

11. Verfahren, nach Anspruch 10,
**dadurch gekennzeichnet,**
**dass** der eingelegte Ring zusätzlich durch mindestens eine Kammleiste (22) an mindestens einer Strebe positioniert wird.

12. Verfahren, nach Anspruch 10 oder Anspruch 11,
**dadurch gekennzeichnet,**
**dass** die Vorrichtung (14) zur Übergabe mindestens eines Ringes in eine Haltevorrichtung (21) einen Spreizmechanismus, der an einer Krone (19) angeordnet ist, aufweist, der durch stufenweises oder kontinuierliches Schließen den oder die Ringe sequentiell, ausgehend vom größten Ringdurchmesser bis zum kleinsten Ringdurchmesser an die Haltevorrichtung (21) lagerichtig übergibt.

13. Verfahren, nach einem der Ansprüche 10 bis 12,
**dadurch gekennzeichnet,**
**dass** vor der Übergabe mindestens eines Ringes an die Haltevorrichtung (21) die Vorrichtung (14) zur Übergabe mindestens eines Ringes in eine Haltevorrichtung (21) händisch von einer Bedienperson mit mindestens einem Ring bestückt wird und/oder entweder ein Ring durch Eintauchen der Krone (19) in den Ring oder mehrere flächig bereitgestellte Ringe durch Eintauchen der Krone (19) in den kleinsten Einzelring und vorheriges oder während des Eintauchens erfolgendes Aufspreizen des Spreizmechanismuses aufgenommen wird oder ein Ring durch Eintauchen des Spreizmechanismuses in den Ring oder mehrere flächig bereitgestellte Ringe durch Eintauchen des Spreizmechanismuses in den kleinsten Einzelring und vorheriges oder während des Eintauchens erfolgendes Aufspreizen des Spreizmechanismuses aufgenommen wird.

14. Verfahren, nach einem der Ansprüche 10 bis 13,
**dadurch gekennzeichnet,**
**dass** zum Verbinden eines Ringes mit einer Strebe an einer zwischen dem Ring und der Strebe vorhandenen Fügestelle (7) eine Schweißvorrichtung eingesetzt wird.

15. Verfahren, nach Anspruch 14,
**dadurch gekennzeichnet,**
**dass** während des Schweißprozesses der Ring und die Strebe gegeneinander gedrückt werden, so dass sie sich beim Schweißprozess aufeinander zu bewegen.

16. Verfahren, nach Anspruch 14 oder Anspruch 15,
**dadurch gekennzeichnet,**
**dass** während des Schweißprozesses der Ring und die Strebe aufgrund der mindestens einen Magnetleiste (24) und/oder mittels Federkraft gegeneinander gedrückt werden.

17. Verfahren, nach einem der Ansprüche 14 bis 16,
**dadurch gekennzeichnet,**
**dass** während des Schweißprozesses der aufgeschmolzene Bereich des Ringes in das durch den Wärmeintrag dieser Schmelze inzwischen ebenfalls aufgeschmolzene Material der Strebe eindringt.

18. Verfahren, nach einem der Ansprüche 14 bis 17,
**dadurch gekennzeichnet,**
**dass** zum Schweißen ein Laserstrahl eingesetzt wird.

19. Verfahren, nach Anspruch 18,
**dadurch gekennzeichnet,**
**dass** der Laserstrahl von oben und zentriert zur Fügestelle (7) in den Ring so eingebracht wird, dass lediglich ein innerer Bereich unmittelbar über der Fügestelle (7) aufschmilzt.

20. Verfahren, nach einem der Ansprüche 14 bis 19,
**dadurch gekennzeichnet,**
**dass** als Vorrichtung (14) eine Vorrichtung (14) zur Übergabe mindestens eines Ringes in eine Haltevorrichtung (21), gemäß einem der Ansprüche 1 bis 7, und/oder als Haltevorrichtung (21) eine Haltevorrichtung (21), gemäß einem der Ansprüche 8 oder 9, eingesetzt wird.

## Claims

1. Device (14) for transferring at least one ring into a holding device (21),
**characterised in that**
the device (14) comprises a spreading mechanism which comprises a slider (15), rods (17) arranged movably on the slider (15) and at least two spreading arms (18) which are arranged movably on a crown (19) having a longitudinal axis, and on the rods (17), wherein the slider (15) and/or the crown (19), the longitudinal axis of which is coaxial to an axis (16), are arranged movably on the axis (16), and wherein on the spreading arms (18) at least one ring to be transferred into the holding device (21) is arranged in such a way that a ring arranged on the spreading arms (18) can slide on the spreading arms (18).

2. Device (14) according to claim 1,
**characterised in that**
at least one spreading arm (18) has an end facing the crown (19) and at least one end facing away from the crown (19).

3. Device (14) according to claim 1 of claim 2,
**characterised in that**
the device (14) comprises a support plate (8) with at least two spreading arm recesses (11) and/or with a crown recess (12).

4. Device (14) according to any one of the preceding claims,
**characterised in that**
at least one spreading arm (18) is movable arranged on the crown (19) in a stepless or stepped manner.

5. Device (14) according to claim 4,
**characterised in that**
at least one spreading arm (18) has at least one end which for spreading is movable away from the longitudinal axis of the crown (19), and for closing is movable towards the longitudinal axis of the crown (19).

6. Device (14) according to any one of the preceding claims,
**characterised in that**
the device (14) has an attachment area (20) for an operating device.

7. Device (14) according to claim 6,
**characterised in that**
the attachment area (20) arranged on the device (14) is an attachment area (20) for robots.

8. Holding device (21) for at least one ring to be fastened on at least one strut insertable to the holding device (21), wherein the holding device (21) comprises at least two comb bars (22), between which the at least one strut can be placed, **characterised by** at least one magnetic bar (24), which is arranged next to the comb bars.

9. Holding device (21) according to claim 8,
**characterised in that**
to connect a ring to a strut, the holding device (21) comprises a welding device.

10. Method of positioning at least one ring on at least one strut, wherein at least one ring is placed in the holding device (21) manually by an operator, or by means of a device (14) for transferring at least one ring into a holding device (21),
**characterised in that**
the inserted ring is positioned on at least one strut by means of at least one magnetic bar (24).

11. Method according to claim 10,
**characterised in that**
the inserted ring is also positioned by means of at least one comb bar (22) on at least one strut.

12. Method according to claim 10 or claim 11,
**characterised in that**
the device (14) for transferring at least one ring into a holding device (21) comprises a spreading mechanism, which is arranged on a crown (19) and through stepped or continuous closing, transfers the ring(s) sequentially, starting from the largest ring diameter to the smallest ring diameter, to the holding device (21) in the correct position.

13. Method according to any one of claims 10 to 12,
**characterised in that**
before the transfer of at least one ring to the holding device (21), the device (14) for transferring at least one ring into a holding device (21), is manually provided with at least one ring by an operator and/or either one ring is taken up by immersion of the crown (19) into the ring or several flatly provided rings are taken up by immersion of the crown (19) into the smallest individual ring and spreading of the spreading mechanism prior to or during immersion, or a ring is taken up by immersion of the spreading mechanism into the ring or several flatly provided rings are taken up by immersion of the spreading mechanism into the smallest individual ring and spreading of the spreading mechanism prior to or during immersion.

14. Method according to any one of claims 10 to 13,
**characterised in that**
for connecting a ring to a strut at a joining point (7) present between the ring and the strut, a welding device is used.

15. Method according to claim 14,
**characterised in that**
during the welding process, the ring and the strut are pressed against each other so that they move towards each other in the welding process.

16. Method according to claim 14 or claim 15,
**characterised in that**
during the welding process, the ring and the strut are pressed against each other as a result of the at least one magnetic bar (24) and/or by means of spring force.

17. Method according to any one of claims 14 to 16,
**characterised in that**
during the welding process, the melted area of the ring penetrates into the material of the strut which in the meantime has melted through the heat input from this melted area.

18. Method according to any one of claims 14 to 17,
**characterised in that**
a laser beam is used for welding.

19. Method according to claim 18,
**characterised in that**
the laser beam is applied to the ring from above and centred on the joining point (7) in such a way that only an inner area directly above the joining point (7) melts.

20. Method according to any one of claims 14 to 19,
**characterised in that**
as the device (14), a device (14) for transferring at least one ring into the holding device (21) according to any one of claims 1 to 7 is used, and/or as the holding device (21), a holding device (21) according to any one of claims 8 or 9 is used.

## Revendications

1. Dispositif (14), destiné à transférer au moins une bague dans un dispositif de maintien (21),
**caractérisé**
**en ce que** le dispositif (14) comporte un mécanisme d'expansion qui est constitué d'un curseur (15), de perches (17) placées de manière mobile sur le curseur (15) et d'au moins deux bras d'expansion (18), qui sont placés de manière mobile sur une couronne (19) comportant un axe longitudinal et sur les perches (17), le curseur (15) et/ou la couronne (19), dont l'axe longitudinal est coaxial à un axe (16) étant placé(e) de manière déplaçable sur un axe (16) et sur le bras d'expansion (18), une bague destinée à être transférée dans le dispositif de maintien (21) étant susceptible d'être placée de telle sorte qu'une bague qui est placée sur le bras d'expansion (18) puisse glisser sur le bras d'expansion (18).

2. Dispositif (14), selon la revendication 1,
**caractérisé**
**en ce qu'**au moins un bras d'expansion (18) comporte une extrémité qui fait face à la couronne (19) et au moins une extrémité opposée à la couronne (19).

3. Dispositif (14), selon la revendication 1 ou la revendication 2,
**caractérisé**
**en ce que** le dispositif (14) comporte une plaque d'appui (8) dotée d'au moins deux encoches de bras d'expansion (11) et/ou d'une encoche de couronne (12).

4. Dispositif (14), selon l'une quelconque des revendications précédentes,
**caractérisé**
**en ce qu'**au moins un bras d'expansion (18) est placé en étant mobile en continu ou graduellement sur la couronne (19) .

5. Dispositif (14), selon la revendication 4,
**caractérisé**
**en ce qu'**au moins un bras d'expansion (18) comporte au moins une extrémité, qui pour l'expansion, est mobile en s'éloignant de l'axe longitudinal de la couronne (19) et pour la fermeture, est mobile en direction de l'axe longitudinal de la couronne (19).

6. Dispositif (14), selon l'une quelconque des revendications précédentes,
**caractérisé**
**en ce que** le dispositif (14) comporte une zone de montage (20) pour un instrument de manipulation.

7. Dispositif (14), selon la revendication 6,
**caractérisé**
**en ce que** la zone de montage (20) placée sur le dispositif (14) est une zone de montage (20) pour un robot.

8. Dispositif de maintien (21) d'au moins une bague susceptible d'être fixée sur une entretoise insérable dans le dispositif de maintien (21), le dispositif de maintien (21) comportant au moins deux baguettes d'engagement (22) entre lesquelles peut être insérée au moins une entretoise, **caractérisé par** au moins une baguette aimantée (24), qui est placée à côté de la baguette d'engagement.

9. Dispositif de maintien (21), selon la revendication 8,
**caractérisé**
**en ce que** pour l'assemblage d'une bague sur une entretoise, le dispositif de maintien (21) comporte un dispositif de soudage.

10. Procédé, destiné à positionner au moins une bague sur au moins une entretoise, au moins une bague étant insérée dans le dispositif de maintien (21), manuellement par un opérateur ou à l'aide d'un dispositif (14) destiné à transférer au moins une bague dans un dispositif de maintien (21),
**caractérisé**
**en ce que** la bague et positionnée par au moins une baguette aimantée (24) sur au moins une entretoise.

11. Procédé selon la revendication 10,
**caractérisé**
**en ce que** la bague insérée est positionnée additionnellement par au moins une baguette d'engagement (22) sur au moins une entretoise.

12. Procédé selon la revendication 10 ou la revendication 11,
**caractérisé**
**en ce que** pour transférer au moins une bague dans un dispositif de maintien (21), le dispositif (14) comporte un mécanisme d'expansion qui est placé sur une couronne (19), qui par une fermeture en continu ou graduelle transfère en position exacte vers le dispositif de maintien (21) la ou les bagues de manière séquentielle, en partant du plus grand diamètre de bague jusqu'au plus petit diamètre de bague.

13. Procédé selon l'une quelconque des revendications 10 à 12,
**caractérisé**
**en ce qu'**avant le transfert d'au moins une bague vers le dispositif de maintien (21), le dispositif (14) destiné à transférer au moins une bague dans un dispositif de maintien (21) est équipé manuellement par un opérateur d'au moins une bague et/ou soit une bague est réceptionnée par immersion de la couronne (19) dans la bague ou plusieurs bagues mises à disposition à plat sont réceptionnées par immersion de la couronne (19) dans la plus petite bague individuelle et par expansion du mécanisme d'expansion préalable ou effectuée pendant l'immersion ou une bague est réceptionnée par immersion du mécanisme d'expansion dans la bague ou plusieurs bagues mises à disposition à plat sont réceptionnées dans la plus petite bague individuelle par immersion du mécanisme d'expansion dans la plus petite bague individuelle et par expansion préalable ou effectuée pendant l'immersion du mécanisme d'expansion.

14. Procédé selon l'une quelconque des revendications 10 à 13,
**caractérisé**
**en ce que** pour assembler une bague avec une entretoise, l'on utilise un dispositif de soudage sur un point de jointage (7) présent entre la bague et l'entretoise.

15. Procédé selon la revendication 14,
**caractérisé**
**en ce que** pendant le processus de soudage, l'on pousse l'une contre l'autre la bague et l'entretoise, de sorte qu'elles se déplacent l'une vers l'autre pendant le processus de soudage.

16. Procédé selon la revendication 14 ou la revendication 15,
**caractérisé**
**en ce que** pendant le processus de soudage, l'on pousse l'une contre l'autre la bague et l'entretoise du fait de l'au moins une baguette aimantée (24) et/ou à l'aide d'une force de ressort.

17. Procédé selon l'une quelconque des revendications 14 à 16,
**caractérisé**
**en ce que** pendant le processus de soudage, la zone fondue de la bague pénètre dans la matière de l'entretoise également fondue dans l'intervalle par l'apport de chaleur de ladite masse fondue.

18. Procédé selon l'une quelconque des revendications 14 à 17,
**caractérisé**
**en ce que** l'on utilise un rayon laser pour le soudage.

19. Procédé selon la revendication 18,
**caractérisé**
**en ce que** l'on introduit le rayon laser par le haut et de manière centrée vers le point de jointage (7) dans la bague, de telle sorte que ne fonde qu'une zone interne directement située au-dessus du point de jointage (7).

20. Procédé selon l'une quelconque des revendications 14 à 19,
**caractérisé**
**en ce qu'**en tant que dispositif (14), l'on utilise un dispositif (14) destiné à transférer au moins une bague dans un dispositif de maintien (21) selon l'une quelconque des revendications 1 à 7, et/ou en tant que dispositif de maintien (21), l'on utilise un dispositif de maintien (21) selon l'une quelconque des revendications 8 ou 9.
